**Europäisches Patentamt**

**European Patent Office**

**Office européen des brevets**

(19)

(11) **EP 1 223 437 A2**

(12) **EUROPÄISCHE PATENTANMELDUNG**

(43) Veröffentlichungstag:
**17.07.2002 Patentblatt 2002/29**

(51) Int Cl.⁷: **G02B 1/11**

(21) Anmeldenummer: **01130830.1**

(22) Anmeldetag: **27.12.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **05.01.2001 DE 10101017**

(71) Anmelder: **CARL ZEISS SEMICONDUCTOR MANUFACTURING TECHNOLOGIES AG**
**73446 Oberkochen (DE)**

(72) Erfinder:
- **Paul, Hans-Jochen**
  **73437 Aalen (DE)**
- **Heller, Matthias**
  **35644 Hohenahr (DE)**

(74) Vertreter: **Patentanwälte**
**Ruff, Wilhelm, Beier, Dauster & Partner**
**Postfach 10 40 36**
**70035 Stuttgart (DE)**

(54) **Reflexionsminderungsbeschichtung für Ultraviolettlicht**

(57) Eine optische Komponente mit geringem Reflexionsgrad für Ultraviolettlicht aus einem Wellenlängenbereich zwischen ca. 180 nm und ca. 370 nm, insbesondere um ca. 248 nm, und für einen großen Einfallswinkelbereich bis mindestens ca. 40° hat ein Substrat (2) und auf mindestens einer Oberfläche (3) des Substrats ein aufgebrachtes Antireflex-Mehrschichtsystem (4). Das Mehrschichtsystem zeichnet sich dadurch aus, daß die substratnächste Schicht (5) nicht aus Magnesiumfluorid besteht und daß keine der Schichten eine Schichtdicke von mehr als der Hälfte der Arbeitswellenlänge hat. Insbesondere sollten die Schichtdicken des niedrigbrechenden Materials ca. 1/3 der Arbeitswellenlänge nicht überschreiten. Durch Einhaltung dieser Randbedingungen können Antireflexbeschichtungen geschaffen werden, die dauerhaft laserbeständig sind sowie hohe Beständigkeit gegen innere Schichtspannungen und thermische Spannungen zeigen.

Fig. 1

EP 1 223 437 A2

**Beschreibung**

Die Erfindung betrifft eine optische Komponente mit geringem Reflexionsgrad für Ultraviolettlicht aus einem Wellenlängenbereich zwischen ca. 180 nm und ca. 370 nm für einen großen Einfallswinkelbereich, insbesondere bis mindestens ca. 40°.

In vielen Bereichen steigt der Bedarf nach leistungsfähigen optischen Komponenten mit geringem Reflexionsgrad für Ultraviolettlicht aus einem Wellenlängenbereich zwischen ca. 180 nm und ca. 370 nm. Licht aus diesem Wellenlängenbereich wird beispielsweise bei Mikrolithographiesystemen zur Herstellung von hochintegrierten Halbleiterbauelementen oder anderen feinstrukturierten Komponenten mit Hilfe von Wafersteppern oder Waferscannern verwendet. Dabei beleuchtet eine Lichtquelle über eine Beleuchtungsoptik eine Maske (Retikel), deren Bild mit Hilfe einer Projektionsoptik auf einen mit Photoresist beschichteten Halbleiterwafer abgebildet wird.

Da die Wirtschaftlichkeit dieses Verfahrens entscheidend von der Schnelligkeit eines Belichtungsvorganges bestimmt wird, werden Optiken mit möglichst geringen Lichtverlusten zwischen Lichtquelle und Wafer angestrebt. Daher werden die Oberflächen transparenter optischer Komponenten der Systeme zur Erhöhung ihrer Lichtdurchlässigkeit bzw. Transmission mit sogenannten Reflexionsminderungsschichten bzw. Antireflexschichten (AR-Schichten) beschichtet. Diese Entspiegelungen führen zu einer Transmissionserhöhung, solange die Lichtverluste beispielsweise durch Absorption und Streuung klein gegenüber der Größenordnung der Reflexionserniedrigung bleiben. Die Reflexionsminderung dient auch der Vermeidung von Falschlicht oder Streulicht, durch das die Abbildungseigenschaften hochwertiger Objektive beeinträchtigt werden können.

Bekanntlich werden in der Regel Mehrschichtsysteme mit mehreren übereinanderliegenden Schichten aus dielektrischen Materialien mit unterschiedlichen Brechungsindizes verwendet, bei denen in der Regel Schichten aus einem hochbrechenden Material und Schichten aus einem relativ dazu niedrigbrechenden Material abwechselnd übereinander angeordnet sind.

Besonders bei optischen Systemen mit einer Vielzahl gekrümmter Linsenflächen und/oder solchen Systemen, bei denen aufgrund hoher numerischer Aperturen große optische Einfallswinkel auf brechende Flächen auftreten, ist es vorteilhaft, wenn die Entspiegelung eine homogene Wirkung auf der gesamten beschichteten Oberfläche und für alle auftretenden optischen Einfallswinkel zeigt, die typischerweise im Bereich zwischen senkrechtem Einfall und mindestens ca. 40° Einfallswinkel liegen.

Häufig ist es zweckmäßig, daß eine optische Komponente nicht nur im Bereich der durch die Art der Lichtquelle bestimmten Arbeitswellenlänge im Ultraviolettbereich durchlässig ist, sondern auch in einem Wellenlängenbereich des sichtbaren Lichts, beispielsweise zwischen ca. 500 nm und ca. 700 nm. Eine gleichzeitige Reflexionsminderung auch für das sichtbare Spektrum erleichtert beispielsweise die Ausrichtung (alignment) zwischen Maske und Substrat bei der Belichtung. Hierfür werden häufig He-Ne-Lasersysteme mit Arbeitswellenlänge 633 nm eingesetzt.

Eine Zweibereichs-Reflexionsminderungsbeschichtung für optische Komponenten eines Bearbeitungslasers ist in der DE 198 31 392 gezeigt. Das für eine Arbeitswellenlänge von 248 nm ausgelegte Mehrschichtsystem besteht aus neun Einzelschichten, die ihrerseits abwechselnd aus Magnesiumfluorid als niedrigbrechendem Material und Aluminiumoxid als hochbrechendem Material bestehen. Die substratnächste erste Schicht bei allen Ausführungsformen besteht aus Magnesiumfluorid, und die Schichtdicke der Magnesiumfluoridschicht variiert unregelmäßig zwischen ca. 25 nm und ca. 150 nm. Diese Schichten sollen eine gute Laserbeständigkeit haben. Bei Magnesiumfluorid-/ Aluminiumoxid-Wechselschichtsystemen mit sehr ähnlichem Aufbau bezüglich Schichtenfolge und Schichtendickenverteilung wurde allerdings nach mehrjährigem Einsatz Rißbildung verbunden mit Schichtablösung beobachtet, wodurch die Lebensdauer derartiger Beschichtungen und der damit ausgestatteten optischen Komponenten bzw. Systeme begrenzt ist.

Der Erfindung liegt die Aufgabe zugrunde, eine Reflexionsminderungsbeschichtung für optische Komponenten vorzuschlagen, die für Ultraviolettlicht aus dem Wellenlängenbereich zwischen ca. 180 nm und ca. 370 nm und große Einfallswinkelbereiche bis mindestens ca. 40° eine wirksame Entspiegelung ermöglicht und sich durch hohe Beständigkeit, insbesondere auch unter Laserbestrahlung, auszeichnet.

Zur Lösung dieser Aufgabe schlägt die Erfindung eine optische Komponente mit den Merkmalen von Anspruch 1 vor. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Ein erfindungsgemäßes Reflexionsminderungs-Mehrschichtsystem zeichnet sich dadurch aus, daß die an das Substrat angrenzende erste Schicht im wesentlichen frei von Magnesiumfluorid ist und daß keine der Schichten eine Schichtdicke von mehr als ca. $(0,5\,\lambda)$ hat, wobei $\lambda$ die Arbeitswellenlänge aus dem ultraviolettem Wellenlängenbereich ist. Es sollte also die erste Schicht kein Magnesiumfluorid enthalten bzw. nicht aus diesem Material bestehen. Jedenfalls sollte eine gegebenenfalls vorhandene Menge an Magnesiumfluorid so gering sein, daß die Eigenschaften dieser ersten Schicht nicht durch die Eigenschaften von Magnesiumfluorid wesentlich bestimmt werden. Besonders günstig ist es, wenn keine der Schichten eine Schichtdicke von mehr als ca. $(0,35\,\lambda)$ aufweist. Als besonders kritisch haben sich die Schichtdicken des niedrigbrechenden Materiales erwiesen, bei dem es sich vorzugsweise um ein Fluorid, insbesondere um Magnesiumfluorid handelt. Hier sollte die Schichtdicke einen Wert von ca. 0,3 λ bei keiner der Schichten überschreiten.

Die Erfindung und ihre vorteilhaften Weiterbildungen zeigen, daß es für die Erzeugung dauerhaft laserbeständiger Antireflexbeschichtungen mit den eingangs erwähnten optischen Eigenschaften erforderlich ist, aus der theoretisch unendlich großen Vielzahl optisch tauglicher Mehrschichtsysteme diejenigen auszuwählen, die im Hinblick auf die Materialwahl für die substratnächste Schicht und im Hinblick auf maximale Schichtdicken den angegebenen Randbedingungen genügen. Insbesondere konnte das aufgrund seines niedrigen Brechungsindexes und der guten Verarbeitbarkeit herkömmlich vielfach eingesetzte Magnesiumfluorid als kritisches Material identifiziert werden, das im Gegensatz zu herkömmlichen Vorschlägen nicht als subtratnächste erste Schicht eingesetzt werden sollte. Darüberhinaus sollen die Schichtdicken dieses Materials möglichst klein gehalten werden. Damit ist Magnesiumfluorid erstmals als "mechanisches Schwachglied" derartiger Beschichtungen identifiziert worden. Dessen negativer Einfluß auf die Beständigkeit der Entspiegelungsbeschichtung läßt sich durch geeignete dünne Einzelschichtdicken und möglichst geringe Gesamtschichtdicken minimieren.

So hat sich gezeigt, daß besonders hohe Laserbeständigkeit und sonstige Beständigkeit, z.B. gegenüber zu Rißbildung führenden inneren Schichtspannungen, dann erreicht werden kann, wenn die Gesamtschichtdicke des Mehrschichtsystemes weniger als das Doppelte der Arbeitswellenlänge beträgt, insbesondere weniger als 1,5 λ. Die Gesamtdicke der Schichten aus niedrigbrechendem Material kann geringer sein als die Arbeitswellenlänge und insbesondere weniger als die Hälfte der Arbeitswellenlänge betragen.

Im Rahmen der Erfindung ist es möglich, Mehrschichtsysteme aufzubauen, die nicht mehr als sechs Einzelschichten aufweisen. Durch diese im Vergleich zu bekannten gattungsgemäßen Mehrschichtsystemen geringere Anzahl von Schichten kann die Laserstabilität der Beschichtung schon alleine dadurch verbessert werden, daß die Wahrscheinlichkeit von zur Schichtdegradation führenden Fehlern in der Mehrfachschicht normalerweise geringer ist, je weniger Schichten aufgebracht werden müssen. Bei derartigen, die Laserstabilität herabsetzenden Fehlern kann es sich insbesondere um Verunreinigungen, Defekte oder Einschlüsse handeln, die die lokale Absorption erhöhen und dadurch zu einer ungleichmäßigen Strahlenbelastung der Schicht führen können. Eine Reduzierung der Schichtzahl führt auch zu einer Prozeßvereinfachung, was die Kosten für die Bereitstellung der beschichteten Optikkomponenten verringern kann.

Es hat sich weiterhin gezeigt, daß es vorteilhaft ist, wenn das Verhältnis zwischen der Summe der Schichtdicken der Schichten aus niedrigbrechendem Material und der Summe der Schichtdicken der Schichten aus hochbrechendem Material unterhalb von ca. 1,5 liegt, insbesondere unterhalb von ca. 1,2. Möglicherweise wird hierdurch dem Aufbau von thermischen Spannungen im Schichtsystem sowie zwischen Schichtsystem und Substrat sowie inneren Schichtspannungen günstig entgegengewirkt.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können.

Ausführungsbeispiele der Erfindung sind in den Zeichnungen dargestellt und werden im folgenden näher erläutert. Es zeigen:

Fig. 1        einen schematischen Schnitt durch eine Ausführungsform einer erfindungsgemäßen Mehrschicht-Reflexionsminderungsbeschichtung mit sechs auf einem Substrat aus synthetischem Quarz aufgebrachten Schichten zur Reflexionsminderung bei einer Arbeitswellenlänge von 248 nm und im sichtbaren Spektralbereich;

Fig. 2        ein Diagramm, welches berechnete und gemessene Werte für den Reflexionsgrad der in Fig. 1 dargestellten Mehrfachschicht als Funktion der Wellenlänge für senkrechten Lichteinfall zeigt;

Fig. 3        ein Diagramm, das für ein anderes Mehrschichtsystem mit zehn Einzelschichten berechnete und gemessene Werte für den Reflexionsgrad als Funktion der Wellenlänge für senkrechten Lichteinfall zeigt;

Fig. 4 und 5    Diagramme, die für ein Mehrschichtsystem mit sechs Einzelschichten berechnete und gemessene Werte für Reflexionsgrad (Fig. 4) bzw. den entsprechenden Transmissionsgrad (Fig. 5) als Funktion der Wellenlänge für senkrechten Lichteinfall zeigt;

Fig. 6        ein Diagramm, das für das Sechsschichtsystem gemäß Fig. 4 und 5 gemessene und berechnete Werte für den Reflexionsgrad bei einer Arbeitswellenlänge von 248 nm als Funktion des Einfallswinkels θ zeigt;

Fig. 7       ein Diagramm, das für ein anderes Mehrschichtsystem mit sechs Schichten berechnete und gemessene Werte des Reflexionsgrades als Funktion der Wellenlänge für senkrechten Lichteinfall zeigt;

Fig. 8       ein Diagramm, das für das Sechsschichtsystem gemäß Fig. 7 und eine Arbeitswellenlänge von 248 nm berechnete und gemessene Werte für den Reflexionsgrad als Funktion des Einfallswinkels θ zeigt und

Fig. 9       ein Diagramm, das berechnete Werte für den Reflexionsgrad von drei äquivalenten Mehrschichtsystemen als Funktion der Wellenlänge für verschiedene Arbeitswellenlängen (193 nm, 248 nm und 365 nm) zeigt.

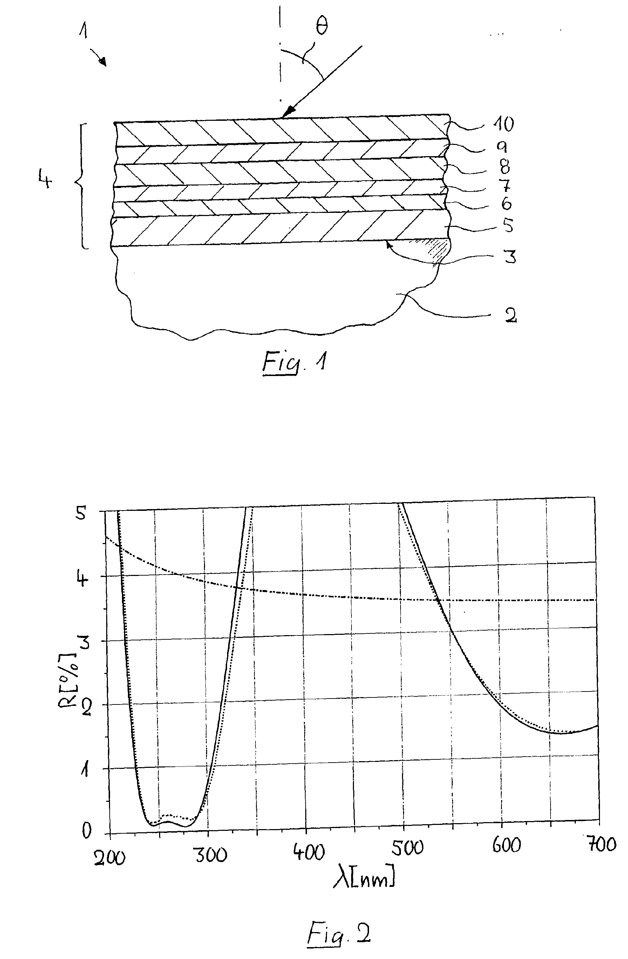

In Fig. 1 ist ein schematischer Schnitt durch den Oberflächenbereich einer optischen Komponente 1 gezeigt, die ein Substrat 2 aus einem für Ultraviolettlicht mit einer Wellenlänge von ca. 248 nm transparenten Material aufweist. Auf die gezeigte, gekrümmte Oberfläche 3 des Substrats, bei dem es sich beispielsweise um eine bikonvexe Linse handeln kann, ist zur Reflexionsminderung eine mehrlagige Antireflexbeschichtung 4 mit sechs übereinanderliegenden Schichten 5 bis 10 aufgebracht.

Das Substrat 2 besteht aus synthetischem Quarzglas hoher Reinheit, das unter anderem unter der Bezeichnung Suprasil erhältlich ist und bei der hier betrachteten Wellenlänge von $\lambda$ = 248 nm einen Brechungsindex von n = 1,5 aufweist. Bei anderen Ausführungsformen kann das Substrat auch aus einem kristallinen Material bestehen, insbesondere aus einem Fluorid, wie Calciumfluorid. Die direkt auf die Oberfläche 3 aufgetragene erste Schicht 5 besteht im wesentlichen aus Aluminiumoxid ($Al_2O_3$), das bei der Arbeitswellenlänge einen im Vergleich zum Substrat höheren Brechungsindex von ca. n = 1,69 hat. Die substratnächste, hochbrechende Schicht 5 hat eine Schichtdicke von ca. 64,2 nm bzw. ca. 0,26 $\lambda$ und stellt die dickste Einzelschicht des Mehrschichtsystemes 4 dar. Die darüberliegende zweite Schicht 6 besteht im wesentlichen aus Magnesiumfluorid ($MgF_2$), das im Vergleich zur ersten Schicht und zum Substrat 2 einen niedrigeren Brechungsindex von ca. n = 1,41 aufweist. Diese Schicht ist mit ca. 10 nm Schichtdicke sehr dünn. Die darüberliegenden Schichten 7, 8, 9, 10 sind in dieser Reihenfolge Aluminiumoxid (13,4 nm), Magnesiumfluorid (37,2 nm), Aluminiumoxid (30,5 nm) und Magnesiumfluorid (52,1 nm).

Für die Charakterisierung dieses Schichtdesigns wird hier auch folgende Kurznotation verwendet:

$$S|64,2/A|10,0/M|13,4/A|37,2/M|30,5/A|52,1/M| \qquad (1)$$

Bei dieser Notation bezeichnet S das Substrat, ein senkrechter Strich (|) eine Grenzfläche und die Angabe 64,2/A eine Schicht aus Aluminiumoxid (A) mit 64,2 nm Schichtdicke. Der Buchstabe M steht für Magnesiumfluorid.

Es ist zu erkennen, daß keine der Schichten 5 bis 10 eine Schichtdicke von mehr als ca. 65 nm (bzw. 0,26 $\lambda$) hat, daß die dickste Magnesiumfluorid-Einzelschicht (Außenschicht 10) nur ca. 52,1 nm (ca. 0,21 $\lambda$) dick ist und daß die substratnächste Schicht durch ein Metalloxid, nämlich Aluminiumoxid gebildet ist. Die Gesamtdicke der Mehrschichtanordnung 4 liegt mit ca. 207 nm unterhalb der Arbeitswellenlänge und beträgt nur ca. 0,83 $\lambda$. Die insgesamt sehr dünne Beschichtung 4 ist nahezu zu gleichen Dicken auf Teilen aus hochbrechendem Material und niedrigbrechendem Material aufgebaut, wobei das Verhältnis zwischen der Summe der Schichtdicken der Schichten aus niedrigbrechendem Material und der Summe der Schichtdicken der Schichten 5, 7, 9 aus hochbrechendem Material mit ca. 0,92 nahe bei einem eine Gleichverteilung repräsentierenden Wert von 1 liegt.

Die Schichten des in Fig. 1 gezeigten und aller folgenden Beispiele sind in an sich bekannter Weise durch physikalische Gasphasenabscheidung (PVD) in Vakuum auf das Substrat 2 aufgebracht. Zur Belegung kann auch jede andere geeignete Technik verwendet werden.

Wesentlich optische Eigenschaften der in Fig. 1 dargestellten Sechsschicht-Entspiegelung werden anhand des Diagrammes in Fig. 2 erläutert. Dort ist der Reflexionsgrad R (in Prozent) des in Fig. 1 gezeigten Schichtsystemes in Abhängigkeit von der Wellenlänge $\lambda$ der einfallenden elektromagnetischen Strahlung bei nahezu senkrechtem Lichteinfall gezeigt, wobei der dargestellte Wellenlängenbereich sowohl den Bereich von tiefem Ultraviolettlicht (DUV) unterhalb von ca. 400 nm, als auch den Bereich sichtbaren Lichtes mit größeren Wellenlängen umfaßt. Dabei repräsentiert die strichpunktierte Linie den berechneten Reflexionsgrad eines unbeschichteten Substrats, die durchgezogene Linie den berechneten Reflexionsgrad der Mehrlagenbeschichtung gemäß Fig. 1 und die gepunktete Linie entsprechende Meßwerte des Reflexionsgrades der obigen Mehrfachbeschichtung.

Es ist zu erkennen, daß die Sechsfachschicht im Bereich der Arbeitswellenlänge um 248 nm eine wirksame Entspiegelung schafft, durch die der Reflexionsgrad breitbandig im Bereich von ca. 235 nm und ca. 292 nm auf Werte unterhalb von ca. 0,3 % bei der Arbeitswellenlänge reduziert ist. Das entspricht einer Bandbreite von ca. 1,24, wobei die Bandbreite das Wellenlängenverhältnis zwischen langwelliger und kurwelliger Grenze des Bereichs angibt, in dem der Reflexionsgrad unterhalb von ca. 0,3% liegt. Zusätzlich ergibt sich eine wirksame Entspiegelung bzw. Transmissionserhöhung im Wellenlängenbereich zwischen ca. 600 nm und ca. 800 nm, wo der Reflexionsgrad im Vergleich zum unbeschichteten Substrat etwa auf die Hälfte bzw. auf weniger als 2 % reduziert wird. Diese Zweibereichswirkung kann die Ausrichtung zwischen Retikel und Wafer (Alignment) während der Belichtung erleichtern, da hier mit sichtbarem Licht (ca. 633 nm) arbeitende Alignment-Einrichtungen, die die Optikkomponenten durchstrahlen, genutzt werden können, ohne daß es durch Transmissionsverluste und/oder Falschlicht bzw. Geisterbilder zu Ungenauigkeiten kommt.

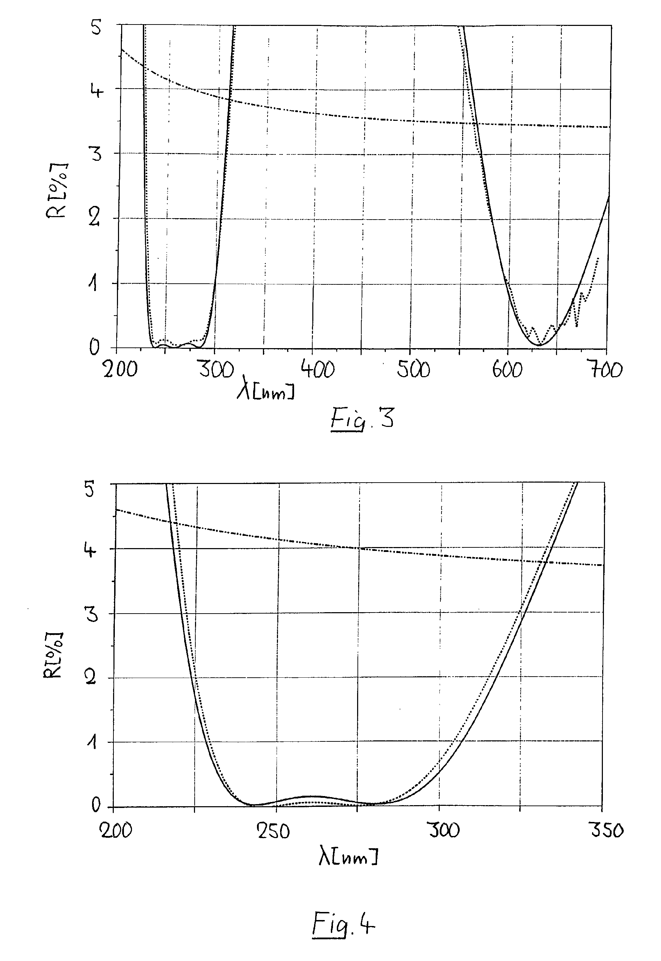

Anhand von Fig. 3 wird nun erläutert, daß bei Bedarf erfindungsgemäße Beschichtungen auch eine weitere Verminderung der Reflexion in den angegebenen beiden Wellenlängenbereichen bewirken können. Hierzu wird beispielhaft ein Mehrschichtsystem mit zehn Einzelschichten beschrieben, die abwechselnd aus Aluminiumoxid und Magnesiumoxid bestehen. Das Schichtsystem läßt sich mit obiger Notation wie folgt charakterisieren:

$$S|76,5/A|11,0/M|18,0/A|23,4/M|15,7/A|70,0/M|73,0/A|$$

$$47,7/M|37,2/A|45,8/M| \tag{2}$$

Bei dieser Schicht mit einer Gesamtdicke von ca. 418 nm besteht die substratnächste Schicht wieder aus Aluminiumoxid. Die dickste Magnesiumoxid-Einzelschicht hat ca. 70,0 nm Schichtdicke und liegt etwa in der Mitte des Schichtpaketes. Das Verhältnis der Summe der Schichtdicken aus niedrigbrechendem Material und hochbrechendem Material beträgt ca. 0,9.

Damit liegt der wesentliche Unterschied zu der in Fig. 1 gezeigten Ausführungsform in der um vier Schichten höheren Schichtenzahl, die sich in der größeren Gesamtdicke niederschlägt. In Fig. 3 ist zu erkennen, daß der Reflexionsgrad im Arbeitswellenlängenbereich zwischen ca. 235 nm und ca. 290 nm auf Restreflexionen von weniger als 0,2 % reduziert werden kann. Außerdem ergibt sich im Vergleich zur Sechsfachschicht (Fig. 1) eine größere Bandbreite dieser Reflexionsminderung, die im Beispiel ca. 1,25 beträgt (Als Bandbreite wird hier das Verhältnis der langwelligen Grenze zur kurzwelligen Grenze des Bereichs wirksamer Entspiegelung mit Reflexionsgraden unterhalb 0,3% bezeichnet). Diese Breitbandigkeit ist u.a. deshalb vorteilhaft, da dadurch eine relativ gute optische Wirkung bis zu hohen Einfallswinkeln gefördert wird. Zudem ergibt sich eine gute homogene optische Wirkung auf Substraten bis zu einer gewissen Inhomogenität der Dicken der Einzelschichten auf dem Substrat, die sich z.B. aufgrund von Schichtdickenabfall zum Rand einer Linsenfläche hin ergeben können. Auch im sichtbaren Spektralbereich ergibt sich im Vergleich zur Sechsfachschicht (Fig. 1 und 2) eine wirksamere Reflexionsminderung, wobei beispielsweise im Bereich zwischen 600 nm und 670 nm der Restreflexionsgrad auf Werte unterhalb 1 % reduziert ist.

Anhand der Fig. 4 bis 6 wird ein weiteres Beispiel einer erfindungsgemäßen Mehrfachbeschichtung mit sechs Einzelschichten erläutert, das besonders vorteilhaft dann eingesetzt werden kann, wenn eine Transmissionserhöhung im Bereich des sichtbaren Lichtes nicht erforderlich ist. Dieses Beispiel wird mit der obigen Notation wie folgt charakterisiert:

$$S|45,3/A|13,2/M|15,6/A|50,8/M|38,9/A|46,3/M| \tag{3}$$

Dieses flache Schichtsystem hat eine Gesamtdicke von ca. 210 nm, was weniger als die Arbeitswellenlänge ist. Die dickste Magnesiumfluorid-Einzelschicht liegt etwa in der Mitte des Schichtpaketes und hat eine Schichtdicke von 50,8 nm entsprechend ca. 0,2 $\lambda$. Die substratnächste Schicht besteht wieder aus Aluminiumoxid. Das Verhältnis zwischen der Summe der Schichtdicken aus niedrigbrechendem und hochbrechendem Material beträgt hier ca. 1,1, es liegen also umgekehrte Verhältnisse wie bei der Schicht gemäß Fig. 1 und 2 vor.

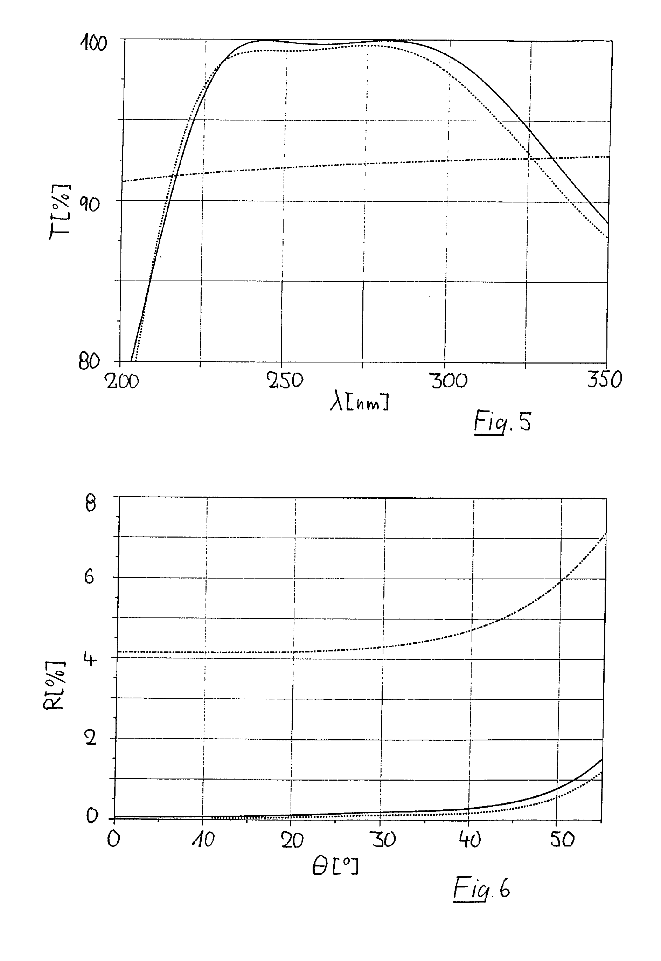

Die optischen Eigenschaften des Sechschicht-Systemes werden anhand der Fig. 4 bis 6 erläutert, in denen jeweils die strichpunktierten Linien die Werte für ein unbeschichtetes Substrat zeigen, während die durchgezogene Linie berechnete und die punktierte Linie gemessene Werte für Reflexionsgrad bzw. Transmissionsgrad repräsentieren. Dabei gelten die Werte des Transmissionsgrades (Fig. 5) für ein beidseitig beschichtetes Substrat, bei dem also sowohl die Lichteintrittsfläche, wie die Lichtaustrittsfläche beschichtet ist. Aus Fig. 4 ergibt sich, daß der Reflexionsgrad im Bereich von ca. 235 und ca. 290 nm breitbandig auf Werte unter ca. 0,2 % Restreflexion reduziert wird. Diese Reflexionsminderung erfolgt im wesentlichen ohne Absorptions- oder Streueffekte, so daß der Transmissionsgrad in diesem Wellenlängenbereich durchgängig Werte von ca. 99 % oder besser erreicht. Entsprechend lassen sich mit derart erfindungsgemäß beschichteten Linsen oder anderen transparenten Optikkomponenten (z. B. Prismen, Platten oder dergleichen) lichtstarke optische Systeme aufbauen.

Anhand Fig. 6 ist erkennbar, daß diese hervorragenden optischen Eigenschaften nicht nur bei senkrechtem oder nahezu senkrechtem Lichtdurchtritt durch die Optikkomponente erreicht werden, sondern homogen über einen großen Einfallswinkelbereich zwischen 0° und mindestens ca. 40°. Der Einfallswinkel e ist hier in üblicher Weise als Winkel zwischen der Senkrechten auf der Lichteintrittsfläche und der Lichteinfallsrichtung definiert. Damit werden Antireflexbeschichtungen mit homogener Wirkung auf der gesamten (gekrümmten) Linsenfläche und für einen großen Bereich der in der Praxis auftretenden optischen Einfallswinkel bereitgestellt. Es ist zu erkennen, daß der Reflexionsgrad im Bereich zwischen $0° < \theta < 40°$ weniger als ca. 0,3 % beträgt und auch im Bereich bis zu $\theta = 50°$ deutlich unterhalb von 1 % Restreflexion bleibt.

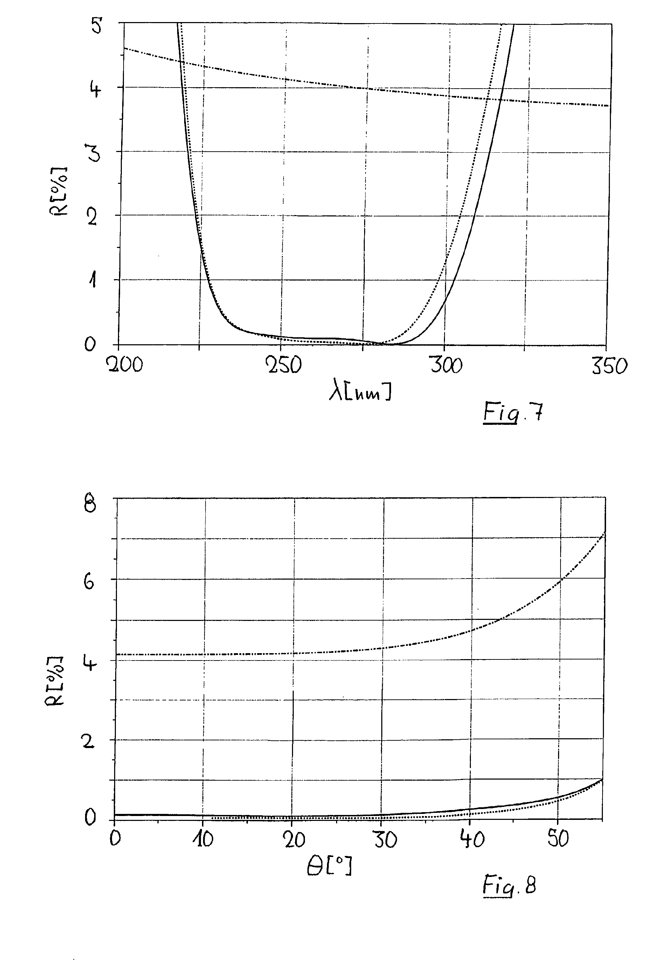

Anhand der Fig. 7 und 8 werden wesentliche optische Eigenschaften einer anderen Ausführungsform eines Mehrschichtsystems mit sechs Schichten beschrieben, das unter Verwendung der oben erläuterten Notation wie folgt charakterisiert ist:

$$S|70,7/A|58,4/M|66,4/A|57,0/M|36,3/A|45,9/M| \tag{4}$$

Ähnlich wie bei der Ausführungsform gemäß Fig. 3 ist die absolut dickste Schicht die substratnächste Aluminiumoxidschicht mit 70,7 nm Schichtdicke. Darauf folgt die dickste Magnesiumfluorid-Einzelschicht mit ca. 58,4 nm Dicke. Das Verhältnis der Summe der Dicken aus niedrigbrechendem und hochbrechendem Material beträgt hier ca. 0,93, die Gesamtdicke der Mehrfachbeschichtung liegt bei 335 nm entsprechend ca. 1,35 $\lambda$. Dieses Schichtsystem hat sehr ähnliche optische Eigenschaften wie dasjenige gemäß Fig. 4 bis 6. Der Wellenlängenbereich wirksamer Reflexionsminderung liegt hier zwischen ca. 235 und ca. 290 nm entsprechend einer Bandbreite von ca. 1,23. Die Restreflexion liegt in diesem Bereich überwiegend unterhalb 0,2 %. Diese wirksame Entspiegelung erstreckt im Vergleich zur Ausführungsform gemäß Fig. 4 bis 6 über einen noch weiteren Winkelbereich, wobei der Restreflexionsgrad zwischen $0° < \theta < 40°$ unterhalb ca. 0,3 % und auch bei $\theta = 50°$ noch unterhalb von ca. 0,5 % liegt.

Die Erfindung wurde hier anhand mehrerer Beispiele beschrieben, die erläutern, daß im Rahmen der in den Ansprüchen definierten Erfindung Mehrschicht-Antireflexbeschichtungen geschaffen werden können, die höchsten Anforderungen bezüglich Reflexionsminderung im Arbeitswellenlängenbereich um $\lambda = 248$ nm insbesondere im Bereich zwischen ca. 235 nm und 295 nm, und gegebenenfalls auch in einem Bereich des sichtbaren Lichtes genügen. Da die Entspiegelung über einen großen Einfallswinkelbereich bis mindestens 40° oder gar 50° erreicht wird, können erfindungsgemäß beschichtete Optikkomponenten, beispielsweise Linsen, besonders auch in hochaperturigen Optiksystemen eingesetzt werden, wo hohe optische Einfallswinkel aus diesem Bereich auftreten können. Zudem lassen sich auch Linsenflächen mit relativ starker Durchbiegung mit über die gesamte Linsenfläche homogener Wirkung entspiegeln. Durch die Kompaktheit der Gesamtschicht und die Vermeidung hoher Einzelschichtdicken, insbesondere von Magnesiumfluorid, sowie die Vermeidung von Magnesiumfluorid in der substratnächsten ersten Schicht werden Rißbildung und damit verbunden Schichtablösung sowie andere durch energiereiche Strahlung verursachte Langzeitdegradationen der Beschichtungen wirkungsvoll vermieden.

Die angegebenen Schichtdesigns (Aufbau der Beschichtung) können durch geringfügige Dickenkorrekturen der Einzelschichten (zur Anpassung an andere Substratbrechzahlen) auch auf anderen Substratmaterialien, wie Calciumfluorid oder Bariumfluorid, mit im wesentlichen gleichen optischen Schichteigenschaften wirksam sein.

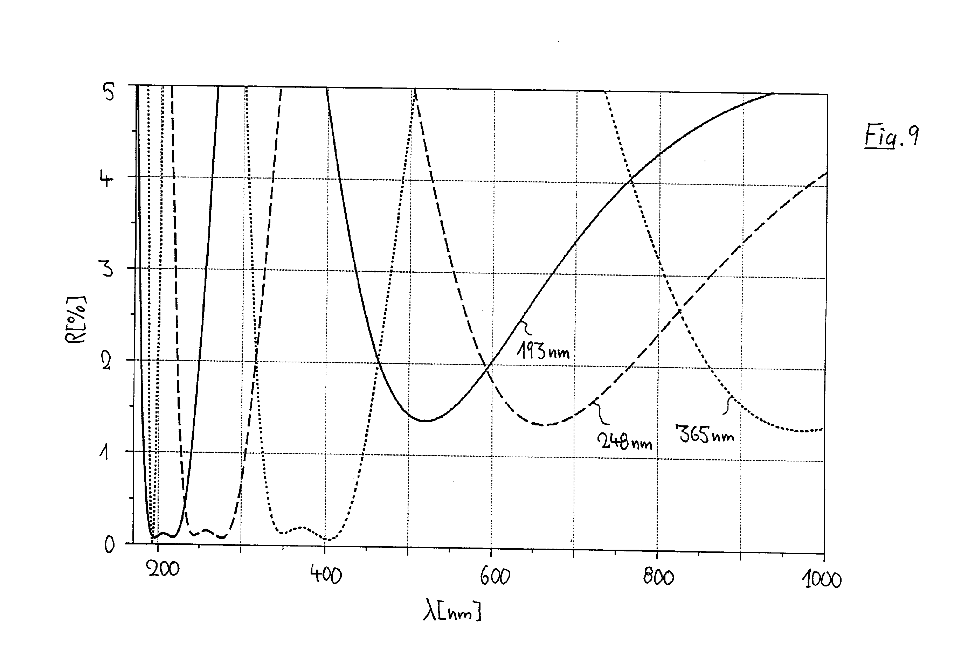

Anhand von Fig. 9 wird nun erläutert, daß die Schichtdesigns, die bisher anhand von Schichten für 248 nm Arbeitswellenlänge erläutert wurden, ohne wesentliche Änderungen bezüglich wellenlängenspezifischer optischer Eigenschaften auch für andere Arbeitswellenlängen nutzbar sind. Als Beispiel wird die zuerst beschriebene Sechsfachschicht gewählt, deren optische Eigenschaften für eine Arbeitswellenlänge von 248 nm in Fig. 2 dargestellt sind. Diese Kurve des Reflexionsgrades über der Wellenlänge entspricht der gestrichelten Kurve in Fig. 9. Bei Angabe der einzelnen Schichtdicken als Bruchteile der Arbeitswellenlänge ergibt sich für das Schichtdesign in (1) näherungsweise folgendes Schichtdesign:

$$S|(0,26\ \lambda)/A|0,04\ \lambda)/M|\ (0,05\ \lambda/A|(0,15\ \lambda)/M|$$

$$(0,12\ \lambda)/A|\ (0,21\ \lambda)/M| \tag{5}$$

Aus dieser auf die Wellenlänge bezogenen Schichtnotation lassen sich durch Einsetzen der entsprechenden Arbeitswellenlänge die absoluten Schichtdicken der Einzelschichten für andere Arbeitswellenlängen ermitteln. Beispielsweise lassen sich ausgehend von dem Schichtdesign aus (1) die geometrischen Schichtdicken der äquivalenten Schichtsysteme für 193 nm bzw. 365 nm durch Multiplikation der (1) gegebenen geometrischen Schichtdicken mit dem Faktor 193/248 bzw. 365/248 ermitteln. In allen Fällen ist das Substratmaterial synthetischer Quarz mit Handelsnamen Suprasil.

Neben der schon aus Fig. 2 bekannten Kurve für 248 nm (gestrichelte Linie in Fig. 9) sind in Fig. 9 die optischen Eigenschaften der entsprechend skalierten äquivalenten Mehrschichtsysteme für Arbeitswellenlänge 193 nm (durchgezogene Linie) und 365 nm (punktierte Linie) gezeigt. Es ist erkennbar, daß sich bei 193 nm entsprechend dünneren Schichten das Minimum der Reflektivität zum kurzwelligen Bereich auf den Bereich um 200 nm verschiebt, wobei bei der Arbeitswellenlänge 193 nm der Restreflexionsgrad unterhalb ca. 0,2% liegt. Während sich die Absolutbreite des Minimums (Abstand zwischen längerwelliger und kurzwelliger Grenze) entsprechend der Verkürzung der Wellenlänge verringert, bleibt die Breitbandigkeit (Verhältnis zwischen längerwelliger und kürzerwelliger Grenze des Bereichs mit Restreflexionsgrad unterhalb 0,3%) nahezu unverändert. Das Minimum im sichtbaren Bereich verschiebt sich zu kürzeren Wellenlängen und liegt nun bei ca. 520 nm bis 530 nm, wobei insgesamt der Reflexionsgrad zwischen ca. 470 nm und ca. 600 nm unterhalb von ca. 2% liegt. Bei 633 nm ist gegenüber einem unbeschichteten Substrat noch eine leichte Reflexionsminderung auf weniger als 3% Restreflexion möglich.

Bei Vergrößerung der Arbeitswellenlänge auf 365 nm und entsprechender Vergrößerung der geometrischen Schichtdicken gemäß (5) verschiebt sich der breitbandige Bereich starker Reflexionsminderung in Ultravioletten zu längeren Wellenlängen, wobei bei der Arbeitswellenlänge 365 nm wiederum ein Restreflexionsgrad von weniger als 0,3% erreicht wird. Dieser günstige Wert liegt auf einem breitbandigen Bereich vor, dessen Absolutbreite größer als bei den dünneren Schichten ist, wobei jedoch das hier als Breitbandigkeit definierte Verhältnis zwischen längerwelliger und kürzerwelliger Grenze im wesentlichen konstant bleibt. Das Reflexionsminimum im sichtbaren Bereich verschiebt sich deutlich zu langen Wellenlängen und liegt nun bei ca. 950 nm.

Die Beispiele zeigen, daß mit den erfindungsgemäßen Beschichtungen optische Komponente mit geringem Reflexionsgrad für Ultraviolettlicht aus einem Wellenlängenbereich zwischen ca. 180 nm und ca. 370 nm herstellbar sind. Damit kann ein großer Wellenlängenbereich heutzutage vielfach genutzer Laserwellenlängen im Bereich der Mikrolithographie genutzt werden. Besondere Merkmale der Beschichtungen sind in optischer Hinsicht vor allem die sehr weitgehende und außerordentlich breitbandige Reflexionsminderung im Bereich der jeweiligen Arbeitswellenlänge. Die Schichten sind daher auch gegen prozeßbedingte geringe Variationen der Schichtdicken relativ tolerant und können auch für stärker gekrümmte Flächen mit ausreichender Wirksamkeit eingesetzt werden. Zusätzlich ergibt sich gegebenenfalls noch eine wirksame Reflexminderung im Bereich des sichtbaren Lichtes. Durch Vermeidung zu großer Schichtdicken von magnesiumfluoridhaltigen Schichten werden besonders beständige Beschichtungen möglich.

**Patentansprüche**

1.    Optische Komponente mit geringem Reflexionsgrad für Ultraviolettlicht aus einem Wellenlängenbereich zwischen ca. 180 nm und ca. 370 nm für einen großen Einfallswinkelbereich, insbesondere bis mindestens ca. 40°, mit einem Substrat (2), bei dem zur Reflexionsminderung auf mindestens einer Oberfläche (3) ein Mehrschichtsystem (4) mit mehreren übereinanderliegenden Schichten (5-10) aufgebracht ist, wobei eine Schicht aus einem hochbrechenden oder einem niedrigbrechenden dielektrischen Material besteht, **dadurch gekennzeichnet, daß** die an das Substrat (2) angrenzende erste Schicht (5) im wesentlichen frei von Magnesiumfluorid ist und daß keine der Schichten (5-10) eine Schichtdicke von mehr als ca. $(0,5\lambda)$ hat, wobei $\lambda$ die Arbeitswellenlänge aus dem Ultraviolettlicht-Wellenlängenbereich ist.

2.    Optische Komponente nach Anspruch 1, **dadurch gekennzeichnet, daß** keine der Schichten (5-10) eine Schichtdicke von mehr als ca. $(0,35\,\lambda)$ aufweist.

3.    Optische Komponente nach Anspruch 1 oder 2, **dadurch gekennzeichnet, daß** keine der Schichten (6, 8, 10) aus niedrigbrechendem Material eine Schichtdicke von mehr als ca. $(0,3\,\lambda)$ aufweist.

4.    Optische Komponente nach einem der vorhergehenden Ansprüche, **dadurch gekennzeichnet, daß** die erste Schicht (5) im wesentlichen aus einem Oxid besteht, insbesondere aus einem Metalloxid, vorzugsweise aus Aluminiumoxid.

5.    Optische Komponente nach einem der vorhergehenden Ansprüche, **dadurch gekennzeichnet, daß** das niedrigbrechende Material im wesentlichen aus einem Fluorid besteht, insbesondere im wesentlichen aus Magnesiumfluorid.

6.    Optische Komponente nach einem der vorhergehenden Ansprüche, **dadurch gekennzeichnet, daß** das hochbrechende Material im wesentlichen aus einem Oxid besteht, insbesondere aus einem Metalloxid, vorzugsweise aus Aluminiumoxid.

7.    Optische Komponente nach einem der vorhergehenden Ansprüche, **dadurch gekennzeichnet, daß** die Gesamtschichtdicke des Mehrschichtsystems (4) weniger als $(2\,\lambda)$ beträgt, insbesondere weniger als $(1,5\,\lambda)$.

**8.** Optische Komponente nach einem der vorhergehenden Ansprüche, **dadurch gekennzeichnet, daß** die Gesamtdicke der Schichten (6, 8, 10) aus niedrigbrechendem Material weniger als λ beträgt, insbesondere weniger als (0,5 λ).

**9.** Optische Komponente nach einem der vorhergehenden Ansprüche, **dadurch gekennzeichnet, daß** das Mehrschichtsystem (4) nicht mehr als sechs Schichten (5-10) aufweist.

**10.** Optische Komponente nach einem der vorhergehenden Ansprüche, **dadurch gekennzeichnet, daß** das Verhältnis zwischen der Summe der Schichtdicken der Schichten (6, 8, 10) aus niedrigbrechendem Material und der Summe der Schichtdicken der Schichten (5, 7, 9) aus hochbrechendem Material unterhalb von ca. 1,5 liegt, insbesondere unterhalb von ca. 1,2.

**11.** Optische Komponente nach einem der vorhergehenden Ansprüche, **dadurch gekennzeichnet, daß** sie in einem Wellenlängenbereich des sichtbaren Lichts, insbesondere zwischen ca. 600 nm und ca. 700 nm, einen geringen Reflexionsgrad aufweist, wobei der Reflexionsgrad zwischen ca. 600 nm und ca. 700 nm weniger als ca. 2%, insbesondere weniger als ca. 1% beträgt.

**12.** Optische Komponente nach einem der vorhergehenden Ansprüche, **dadurch gekennzeichnet, daß** ihr Reflexionsgrad zumindest in einem Einfallswinkelbereich zwischen 0° und ca. 40°, insbesondere zwischen 0° und 50°, weniger als ca. 1% beträgt, vorzugsweise weniger als 0,5%.

**13.** Optische Komponente nach einem der vorhergehenden Ansprüche, **dadurch gekennzeichnet, daß** das Substrat (2) aus Quarzglas oder aus kristallinem Material, insbesondere kristallinem Fluorid besteht, vorzugsweise Calciumfluorid.

**14.** Optische Komponente nach einem der vorhergehenden Ansprüche, **dadurch gekennzeichnet, daß** sie für eine Arbeitswellenlänge von ca. λ=248 nm ausgelegt ist.

**15.** Optische Komponente nach einem der vorhergehenden Ansprüche, **dadurch gekennzeichnet, daß** der Reflexionsgrad im Bereich der Arbeitswellenlänge über eine Bandbreite von mehr als 1,1, insbesondere mehr als 1,2 unterhalb eines vorgegebenen Reflexionsgrades liegt, wobei die Bandbreite das Verhältnis zwischen den Wellenlängen der langwelligen Grenze und der kurzwelligen Grenze des Wellenlängenbereichs ist, in dem der Reflexionsgrad unterhalb von 0,3% liegt.

Fig. 1

Fig. 2

Fig. 3

Fig. 4

Fig. 5

Fig. 6

Fig.7

Fig.8

Fig. 9

EP 1 223 437 A2